# DEMANDE DE BREVET EUROPEEN

(11) **EP 4 674 512 A1**
(43) Date de publication de la demande: **07.01.2026**
(21) Numéro de dépôt: 25180567.7
(22) Date de dépôt: 03.06.2025
(51) Int. Cl.: B01D 53/26, B01D 53/047

(54) **PROCÉDÉ DE RÉGÉNÉRATION AVEC MISE EN PRESSION INITIALE POUR UN SÉCHEUR D'UNE INSTALLATION DE PRODUCTION D'AIR COMPRIMÉ MÉDICAL, ET SÉCHEUR POUR UNE INSTALLATION DE PRODUCTION D'AIR COMPRIMÉ MÉDICAL**

(30) Priorité: 26.06.2024 FR 2406871
(71) Demandeur: Mil'S, 69740 Genas (FR)
(72) Inventeur: MONTI, Alexis, 69100 VILLEURBANNE (FR); BOULANGER, Valentin, 38490 Le Passage (FR); COMPAGNONI, Thomas, 38300 Bourgoin-Jallieu (FR); PARIS, Olivier, 01500 Ambérieu-en-Bugey (FR); REBAUD, Philippe, 69190 Saint-Fons (FR)
(74) Mandataire: Germain Maureau

(57) **Abrégé**

L'invention propose un procédé de régénération pour un sécheur (18) dans une installation (10) de production d'air comprimé médical, et un sécheur correspondant, le sécheur (18) ayant au moins deux colonnes de séchage (52B) soumises à une répétition cyclique de cycles de colonne comprenant chacun un demi-cycle de production et un demi-cycle de régénération comprenant au moins un temps de régénération (REGEN A, REGEN B),
caractérisé en ce que le procédé comporte, pour chaque colonne de séchage considérée (52A, 52B), avant le temps de régénération (REGEN A, REGEN B) pendant le demi-cycle de régénération, au moins un temps de mise en pression initiale (PRESS INIT A, PRESS INIT B), pendant lequel la colonne de séchage considérée (52A, 52B) est alimentée en air comprimé pour augmenter la pression à l'intérieur de la colonne de séchage considérée (52A, 52B) jusqu'à une pression supérieure ou égale à une pression de seuil.

## Description

### Domaine Technique

La présente invention concerne un procédé de régénération pour un sécheur dans une installation de production d'air comprimé médical, et un sécheur pour une installation de production d'air comprimé médical.

### Arrière-plan technique

On trouve des installations de production d'air comprimé médical notamment en milieu hospitalier, l'air médical produit étant susceptible d'être utilisé comme gaz d'assistance respiratoire dans les blocs opératoires ou les salles de réanimation.

Une installation de production d'air comprimé médical comprend généralement au moins un groupe de compression d'air et au moins un groupe de séchage de l'air comprimé, en aval du groupe de compression.

L'installation de production d'air comprimé médical délivre de l'air sous pression, par exemple à un système de distribution et d'utilisation de cet air comprimé. Généralement, l'installation de production comprends des moyens de filtration de l'air qui peuvent être disposés en un ou plusieurs points dans l'installation de production, notamment en amont et/ou en aval du groupe de séchage.

L'installation comprend un groupe de compression d'air, ou plusieurs groupes de compression d'air, qui sont alors généralement disposés en parallèle l'un de l'autre.

L'installation comprend un groupe de séchage, ou plusieurs groupes de séchage, qui sont alors généralement disposés en parallèle l'un de l'autre. Chaque groupe de séchage comprend au moins un sécheur pour retirer une partie de l'humidité susceptible d'être contenue dans l'air comprimé en sortie du groupe de compression.

L'invention s'applique dans le cas où le sécheur comporte au moins une première colonne de séchage et au moins une deuxième colonne de séchage, et dans lequel le sécheur opère cycliquement. Chaque colonne de séchage est soumise à une répétition cyclique de cycles de colonne, chaque cycle de colonne comprenant un demi-cycle de production comprenant au moins un temps de séchage d'air, et un demi-cycle de régénération comprenant au moins un temps de régénération. Le demi-cycle de régénération peut comprendre un temps de mise en pression. La première colonne de séchage et la deuxième colonne de séchage opèrent en opposition de demi-cycles.

Un exemple d'une installation de production d'air comprimé médical, à laquelle les enseignements de l'invention peuvent être appliqués, est décrit dans le document WO-2013/135992-A1.

Le sécheur comporte des moyens de circulation et commutation d'air, comprenant notamment des tubulures de circulation d'air et des vannes de contrôle de la circulation de l'air dans ces tubulures. Pendant tout temps de séchage d'air pour une colonne de séchage considérée, ces moyens de circulation et commutation d'air font circuler de l'air humide selon une première direction au travers de la colonne de séchage considérée. Ces colonnes de séchage sont remplies d'un substrat capable de retenir l'humidité comprise dans l'air et de laisser passer l'air sec résiduel résultant de la séparation. Par exemple, la rétention d'humidité se fait par adsorption sur le substrat, lequel peut par exemple comprendre des particules d'alumine. Pendant tout temps de régénération, les moyens de circulation et commutation d'air font circuler de l'air sec selon une seconde direction, inverse de la première direction, au travers de la colonne de séchage considérée. L'air sec provient de préférence de l'autre des deux colonnes, qui est en cours de production, donc dans un temps de séchage d'air. L'air sec, en traversant la colonne en cours de régénération, provoque le relâchement de l'humidité précédemment stockée dans cette colonne, et est ensuite évacué hors de la colonne.

Il est connu de prévoir, après le temps de régénération pour une colonne de séchage considérée, et avant le temps de séchage d'air immédiatement suivant pour la colonne d'air considérée, un temps de mise en pression pendant lequel la colonne de séchage considérée est alimentée en air comprimé pour amener la pression à l'intérieur de la colonne de séchage à une pression égale à une pression de seuil. Cette mise en pression est utile du fait que le temps de régénération s'effectue dans des conditions telles que la pression à la fin du bord de régénération est proche de la pression atmosphérique, tandis que pour le temps de séchage d'air, la colonne de séchage considérée est alimentée en air comprimé sous la pression délivrée par le groupe de compression, qui est généralement supérieure à 10 bars absolus. Si l'on procède directement à une commutation directe du temps de régénération au temps de séchage d'air, il s'ensuit une onde de pression qui se propage au travers de la colonne de séchage et qui est susceptible d'affecter le substrat contenu dans la colonne de séchage considérée.

On comprend que l'opération de régénération de la colonne de séchage consomme de l'air comprimé pour assurer la régénération. La production de cet air comprimé consomme de l'énergie, énergie qui est presque entièrement perdue. Il y a donc un intérêt à améliorer le procédé de régénération de la colonne de séchage pour en réduire la consommation d'air comprimé, tout en conservant une efficacité de régénération satisfaisante.

### Exposé de l'invention

Dans ce but, l'invention propose un procédé de régénération pour un sécheur dans une installation de production d'air comprimé médical, l'installation comprenant :
- un groupe de compression d'air comprenant au moins un compresseur ;
- un sécheur ayant au moins une première colonne de séchage et au moins une deuxième colonne de séchage, le sécheur opérant cycliquement, chaque colonne de séchage étant soumise à une répétition cyclique de cycles de colonne comprenant chacun un demi-cycle de production comprenant au moins un temps de séchage d'air, et un demi-cycle de régénération comprenant au moins un temps de régénération, la première colonne de séchage et la deuxième colonne de séchage opérant en opposition de demi-cycles ;
- des moyens de circulation et commutation d'air pour, pendant tout temps de séchage d'air pour une colonne de séchage considérée, faire circuler de l'air, dit air humide, selon une première direction au travers de la colonne de séchage considérée, et pendant tout temps de régénération, faire circuler de l'air, dit air sec, selon une seconde direction, inverse de la première direction, au travers de la colonne de séchage considérée.

Le procédé comporte, pour chaque colonne de séchage considérée, avant le temps de régénération pendant le demi-cycle de régénération, au moins un temps de mise en pression initiale, pendant lequel la colonne de séchage considérée est alimentée en air comprimé pour augmenter la pression à l'intérieur de la colonne de séchage considérée jusqu'à une pression supérieure ou égale à une pression de seuil. Cette mise en pression initiale précède, pour une colonne de séchage considérée, le temps de régénération. Lors du temps de régénération suivant, une dépressurisation rapide de cette colonne de séchage considérée est effectuée. Il a été constaté que cette dépressurisation rapide tend à faciliter la désorption et l'évacuation de l'humidité préalablement stockée dans la colonne de séchage.

Le procédé peut de plus avantageusement comporter une ou plusieurs des caractéristiques optionnelles suivantes, prises seules ou en combinaison.

Dans certains exemples, à la fin du temps de mise en pression initiale, la pression dans la colonne de séchage considérée est égale à une pression de production correspondant à la pression dans la colonne de séchage considérée pendant tout temps de séchage d'air pour la colonne de séchage considérée. On a ainsi, pour une pression de production donnée, la plus grande amplitude de pression possible au moment de la dépressurisation rapide qui survient lors du temps de régénération suivant, donc la plus grande efficacité de désorption et d'évacuation de l'humidité préalablement stockée dans la colonne de séchage.

Dans certains exemples, pendant le temps de mise en pression initiale d'une colonne de séchage considérée, la colonne de séchage considérée est alimentée au travers d'une section de passage des moyens de circulation et commutation qui est supérieure à la section de passage des moyens de circulation et commutation au travers de laquelle la colonne de séchage considérée est alimentée pendant le temps de régénération. Cela permet de raccourcir le temps de mise en pression initiale, au bénéfice du temps de régénération pour un temps de cycle donné.

Dans certains exemples, le procédé comporte, pour chaque colonne, après le temps de régénération pendant le demi-cycle de régénération, au moins un temps de mise en pression finale pendant lequel la colonne de séchage considérée est alimentée en air comprimé pour augmenter la pression à l'intérieur de la colonne de séchage considérée jusqu'à une pression égale à une pression de seuil. Cela permet de limiter les variations brutales de pression lors du passage à la phase de production suivante.

Dans certains exemples, le procédé comporte, pour chaque colonne de séchage considérée, avant le temps de mise en pression initiale d'un cycle de régénération donné, mais après le temps de séchage d'air du demi-cycle de production immédiatement précédent pour la colonne de séchage considérée, un temps de dépressurisation pendant lequel la pression dans la colonne de séchage considérée est amenée à un niveau bas. Cela permet d'évacuer l'air précédemment contenu dans la colonne de séchage considérée, cet air pouvant être considéré comme chargé d'une certaine quantité d'humidité, donc moins efficace en termes de régénération.

Dans certains exemples, pendant le temps de dépressurisation, la colonne de séchage considérée est alimentée au travers d'une section de passage des moyens de circulation et commutation qui est supérieure à la section de passage des moyens de circulation et commutation au travers de laquelle la colonne de séchage considérée est alimentée pendant le temps de régénération. Cela permet d'accélérer cette phase de dépressurisation, au bénéfice du temps de régénération pour un temps de cycle donné.

Dans certains exemples, chaque colonne de séchage considérée comporte un port primaire et un port secondaire qui définissent un chemin de circulation d'air au travers de la colonne de séchage considérée ; le port primaire est obturé pendant le temps de mise en pression initiale et est relié à une évacuation d'air pendant le temps de régénération ; et le port secondaire est relié à une source d'air sec sous pression au travers d'une section de passage des moyens de circulation et commutation qui, pendant le temps de mise en pression initiale, est supérieure à la section de passage des moyens de circulation et commutation au travers de laquelle la colonne est alimentée pendant le temps de régénération. Cela permet de raccourcir le temps de mise en pression initiale, au bénéfice du temps de régénération pour un temps de cycle donné.

Dans certains exemples, les moyens de circulation et commutation comprennent au moins une vanne d'évacuation, à commande externe, entre le port primaire et l'évacuation d'air, et au moins une vanne de mise en pression initiale, à commande externe, entre une source d'air sec sous pression et le port secondaire ; pendant le temps de mise en pression initiale, la vanne d'évacuation est commandée dans un état fermé tandis que la vanne de mise en pression initiale est commandée dans un état ouvert ; et, pendant le temps de régénération, la vanne d'évacuation est commandée dans un état ouvert tandis que la vanne de mise en pression initiale est commandée dans un état fermé ou dans un état partiellement ouvert avec une section de passage inférieure à sa section de passage pendant le temps de mise en pression initiale. Une telle réalisation permet de réaliser, à faible coût, une variation de section de passage des moyens de circulation et commutation.

Dans certains exemples, le procédé comporte, pour un même cycle de colonne pour une colonne de séchage considérée, dans un même demi-cycle de régénération, plusieurs temps de mise en pression initiale précédant chacun un temps de régénération. Cela permet de multiplier les dépressurisations rapides de cette colonne de séchage considérée au sein d'un même demi-cycle de régénération, donc de multiplier l'avantage de désorption et d'évacuation de l'humidité préalablement stockée dans la colonne de séchage.

Il est également proposé un sécheur pour une installation de production d'air comprimé médical, le sécheur ayant au moins :
- au moins une première colonne de séchage et au moins une deuxième colonne de séchage, le sécheur opérant cycliquement, chaque colonne de séchage étant soumise à un cycle de colonne comprenant un demi-cycle de production comprenant au moins un temps de séchage d'air, et un demi-cycle de régénération comprenant au moins un temps de régénération, la première colonne de séchage et la deuxième colonne de séchage opérant en opposition de demi-cycles, et
- des moyens de circulation et commutation d'air pour, pendant tout temps de séchage d'air pour une colonne de séchage considérée, faire circuler de l'air selon une première direction au travers de la colonne de séchage considérée, et pendant tout temps de régénération, faire circuler de l'air sec selon une seconde direction, inverse de la première direction, au travers de la colonne de séchage considérée.

Les moyens de circulation et commutation d'air sont configurés pour que, pour chaque colonne de séchage considérée, la colonne de séchage considérée soit alimentée en air comprimé, pendant au moins un temps de mise en pression initiale avant un temps de régénération pendant le demi-cycle de régénération, pour augmenter la pression à l'intérieur de la colonne de séchage considérée jusqu'à une pression supérieure ou égale à une pression de seuil, ceci apportant le même effet technique d'efficacité de la désorption et de l'évacuation de l'humidité préalablement stockée dans la colonne de séchage.

Le sécheur peut de plus avantageusement comporter une ou plusieurs des caractéristiques optionnelles suivantes, prises seules ou en combinaison. Cela permet de limiter les variations brutales de pression lors du passage à la phase de production suivante.

Dans certains exemples, les moyens de circulation et commutation d'air sont configurés pour que, pendant le temps de mise en pression initiale, la colonne de séchage considérée est alimentée au travers d'une section de passage des moyens de circulation et commutation qui est supérieure à la section de passage des moyens de circulation et commutation au travers de laquelle la colonne de séchage considérée est alimentée pendant le temps de régénération. Cela permet de raccourcir le temps de mise en pression initiale, au bénéfice du temps de régénération pour un temps de cycle donné.

Dans certains exemples, les moyens de circulation et commutation d'air sont configurés pour que, pour chaque colonne de séchage considérée, pendant le demi-cycle de régénération, au moins un temps de mise en pression finale soit effectué après le temps de régénération.

Dans certains exemples, chaque colonne de séchage considérée comporte un port primaire et un port secondaire qui définissent un chemin de circulation d'air au travers de la colonne de séchage considérée, en ce que le port primaire est obturé pendant le temps de mise en pression initiale et est relié à une évacuation d'air pendant le temps de régénération, et le port secondaire est relié à une source d'air sec sous pression au travers d'une section de passage des moyens de circulation et commutation qui, pendant le temps de mise en pression initiale, est supérieure à la section de passage des moyens de circulation et commutation au travers de laquelle la colonne de séchage considérée est alimentée pendant le temps de régénération. Cela permet de raccourcir le temps de mise en pression initiale, au bénéfice du temps de régénération pour un temps de cycle donné. Dans certains variantes de tels exemples, les moyens de circulation et commutation comprennent au moins une vanne d'évacuation, à commande externe, entre le port primaire et l'évacuation d'air, et au moins une vanne de mise en pression rapide, à commande externe, entre une source d'air sec sous pression et le port secondaire ; pendant le temps de mise en pression initiale, la vanne d'évacuation est commandée dans un état fermé tandis que la vanne de mise en pression rapide est commandée dans un état ouvert ; et, pendant le temps de régénération, la vanne d'évacuation est commandée dans un état ouvert tandis que la vanne de mise en pression rapide est commandée dans un état fermé ou dans un état partiellement ouvert avec une section de passage inférieure à sa section de passage pendant le temps de mise en pression initiale. Une telle réalisation permet de réaliser, à faible coût, une variation de section de passage des moyens de circulation et commutation.

Dans certains exemples, les moyens de circulation et commutation d'air comportent, entre les ports primaires respectifs de la première colonne de séchage et de la deuxième colonne de séchage, une première tubulure qui détermine une première section de passage entre la première colonne et la deuxième colonne de séchage, et une deuxième tubulure, en parallèle de la première tubulure entre les ports primaires respectifs de la première colonne de séchage et de la deuxième colonne de séchage, la deuxième tubulure étant munie de la vanne commandée de mise en pression initiale. Une telle réalisation permet de réaliser, à faible coût, une variation de section de passage des moyens de circulation et commutation.

### Brève description des dessins

[Fig. 1] : La Figure 1 est un schéma illustrant un premier exemple d'une installation pour la production d'air comprimé médical.
[Fig. 2] : La Figure 2 est un schéma illustrant un deuxième exemple d'une installation pour la production d'air comprimé médical.
[Fig. 3] : La Figure 3 est un schéma illustrant un troisième exemple d'une installation pour la production d'air comprimé médical.
[Fig. 4] : La Figure 4 est un schéma illustrant un premier exemple d'un sécheur pour une installation pour la production d'air comprimé médical, illustrant de manière indicative un état du sécheur dans un temps de régénération pour une des colonnes de séchage.
[Fig. 5] : La Figure 5 est un diagramme illustrant, pour le sécheur de la Figure 4, un exemple d'un cycle opératoire pour le sécheur.
[Fig. 6] : La Figure 6 est un schéma illustrant le premier exemple de sécheur de la Figure 4, illustrant de manière indicative un état du sécheur dans un temps de mise en pression initiale pour une des colonnes de séchage.

### Description détaillée

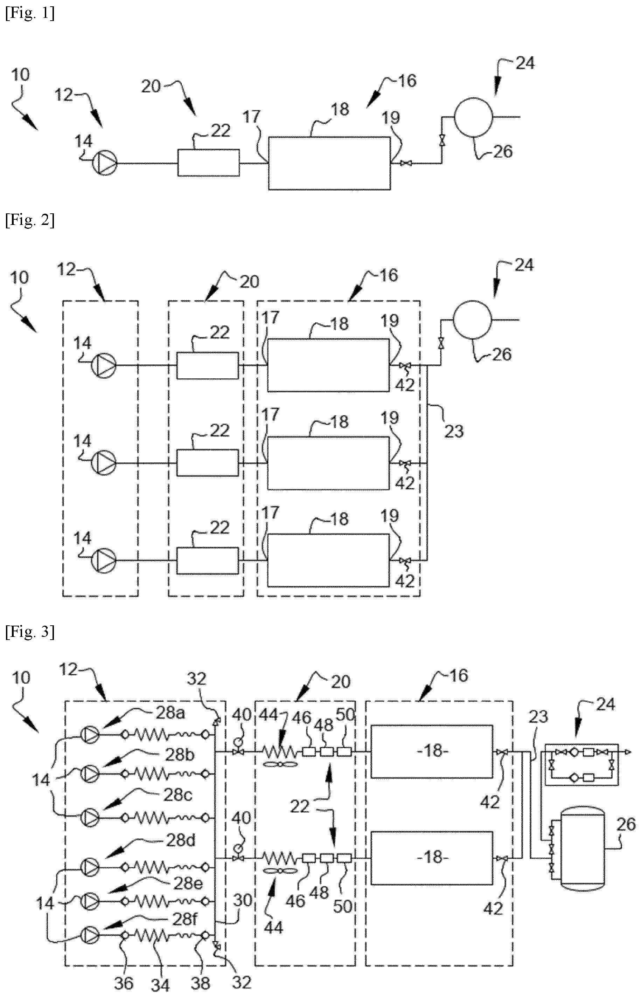

On a représenté sur les Figures 1 à 3 différents exemples d'une installation 10 pour la production d'air comprimé médical. L'installation 10 comporte, reliés en série d'amont en aval, un groupe de compression d'air 12 comprenant au moins un compresseur 14, et un groupe de séchage 16 comprenant au moins un sécheur 18. De préférence, l'installation 10 comporte, entre le groupe de compression d'air 12 et le groupe de séchage 16, un groupe de filtration 20 comprenant au moins une ligne de filtration 22.

L'installation 10 délivre de l'air sous pression, par exemple à un système 24 de distribution et d'utilisation de cet air comprimé. Ce système 24 peut comprendre, entre autres, un accumulateur d'air sous pression 26. L'accumulateur 26 est destiné à former un stock tampon d'air comprimé sec, pour son utilisation dans le système 24 de distribution et d'utilisation.

Dans l'exemple de la Figure 1, le groupe de compression d'air 12 comprend un unique compresseur 14, et le groupe de séchage comprend un unique sécheur 18. Dans cet exemple, il est prévu, intercalée en série entre le compresseur 14 et le sécheur 18, une unique ligne de filtration 22, formant ainsi une unique ligne de compression et de séchage pour délivrer de l'air sous pression au système 24 de distribution et d'utilisation.

Dans les exemples des Figures 2 et 3, le groupe de compression d'air 12 comprend plusieurs compresseurs 14, en l'occurrence respectivement 3 compresseurs et 6 compresseurs. Les compresseurs 14 peuvent être identiques ou peuvent différer par leur technologie et/ou par leur dimensionnement. Le compresseur 14 ou les compresseurs 14 sont par exemple des compresseurs à vis lubrifiés ou des compresseurs à spirale sèche.

Dans une installation comprenant plusieurs compresseurs 14, on peut prévoir que chaque compresseur 14 soit dimensionné pour fournir un débit d'air égal au débit d'air maximal que l'installation 10 est susceptible de fournir. Ainsi, on peut prévoir que l'un des compresseurs 14 soit prévu pour fonctionner en conditions normales d'utilisation, formant ainsi un compresseur principal, les autres compresseurs 14 étant des compresseurs redondants prévus pour palier à des moments de repos ou de maintenance. On peut aussi prévoir que les différents compresseurs 14 soient utilisés de façon alternative pour que leurs temps de fonctionnement respectifs soient sensiblement identiques. Dans ce cas, chaque compresseur 14 peut alternativement devenir le compresseur principal pour une période déterminée, les autres compresseurs devenant à tour de rôle des compresseurs redondants.

Cependant, dans une installation comprenant plusieurs compresseurs 14, on peut prévoir que chaque compresseur 14 soit dimensionné pour fournir seulement une partie du débit d'air maximal que l'installation 10 est susceptible de fournir, avec dans ce cas, la possibilité que plusieurs compresseurs soient simultanément en production pour fournir de l'air comprimé.

Dans l'exemple de la Figure 2, l'installation 10 comporte trois lignes de compression et de séchage, distinctes et parallèles. Dans cet exemple, chaque ligne de compression et de séchage comprend un unique compresseur 14, et un unique sécheur 18. Dans cet exemple, il est prévu, intercalée en série entre le compresseur 14 et le sécheur 18 de chaque ligne de compression et de séchage, une unique ligne de filtration 22. Les trois lignes de compression et séchage, distinctes et en parallèle l'une de l'autre, délivrent de l'air comprimé dans une même rampe commune 23 pour délivrer de l'air sous pression au système 24 de distribution et d'utilisation.

Dans l'exemple de la Figure 3, l'installation 10 comporte un groupe de compression d'air 12 composé de plusieurs lignes de compression 28a à 28f, comprenant chacune un compresseur 14, et montées en parallèle l'une de l'autre pour délivrer de l'air comprimé dans un même tubulure commune 30. A titre d'exemple les quatre lignes de compression 28a à 28d forment un premier ensemble et les deux lignes de compression 28e et 28f forment un second ensemble. La tubulure commune 30 est par exemple équipée, de préférence à chacune de ses extrémités, d'une soupape 32. Les lignes de compression 28a à 28d du premier ensemble sont par exemple prévues pour fonctionner en conditions normales d'utilisation. Celles-ci peuvent fonctionner seule ou conjointement en fonction du débit d'air comprimé qu'il est nécessaire de délivrer, à un instant donné, au système 24 de distribution et de consommation. Les lignes de compression 28e et 28f du deuxième ensemble sont, dans un tel exemple, prévues pour fonctionner lorsqu'une ou plusieurs des lignes de compression 28a à 28d du premier ensemble sont au repos, en maintenance ou en panne.

Les lignes de compression 28a à 28f sont de préférence identiques, et peuvent par exemple comprendre, outre un compresseur 14, en série en aval du compresseur 14, un refroidisseur 34. Un clapet anti-retour amont 36 et/ou clapet anti-retour aval 38 peuvent être prévus en série dans la ligne de compression, respectivement en amont et en aval du refroidisseur 34. Des éléments identiques ou similaires peuvent être mis en œuvre pour les groupes de compression dans les configurations des installations 10 des Figures 1 et 2.

Dans l'exemple de la Figure 3, l'installation 12 comporte un groupe de filtration 20 composé de deux lignes de filtration 22, de préférence identiques, et le groupe de séchage 16 comporte deux sécheurs 18, eux aussi de préférence identiques. Chaque ligne de filtration 22 est connectée en amont à la tubulure commune 30, avec par exemple l'interposition d'une vanne de coupure 40, et, en aval, à l'un de sécheurs 18. Chaque sécheur 18 délivre de l'air comprimé dans une même rampe commune 23 pour délivrer de l'air sous pression au système 24 de distribution et d'utilisation. Une vanne de coupure 42 peut être prévue entre chaque sécheur 18 et la rampe commune 23.

Sur la Figure 3, on a illustré un exemple de réalisation pour une ligne de filtration 22. Dans cet exemple, chaque ligne de filtration 22 comprend, successivement en série dans la ligne de filtration 22 :
- un électro-refroidisseur 44 ;
- un filtre cyclone 46 prévu pour retenir le condensât, c'est-à-dire essentiellement l'eau produite par les lignes de compressions 28a à 28f ;
- un filtre amont 48; et
- un filtre aval 50.

Par exemple, le filtre amont 48 et le filtre aval 50 peuvent être différents, ou être identiques. Ainsi, dans certains modes de réalisation, on peut prévoir que le filtre amont 48 soit prévu pour retenir les particules de diamètre supérieur à un premier diamètre, par exemple égal à 1 micromètre, et que le filtre aval 50 soit prévu pour retenir les particules de diamètre supérieur à un second diamètre, inférieur au premier diamètre, par exemple égal à 0,01 micromètre. Dans d'autres modes de réalisation, on peut prévoir que le filtre amont 48 et le filtre aval 50 soient tous les deux prévus pour retenir les particules de diamètre supérieur à un même diamètre, par exemple égal à 0,01 micromètre. Cependant, l'homme du métier peut concevoir d'autres aménagement pour une ligne de filtration 22. Des éléments identiques ou similaires peuvent être mis en œuvre pour les groupes de filtration 22 dans les configurations des installations 10 des Figures 1 et 2.

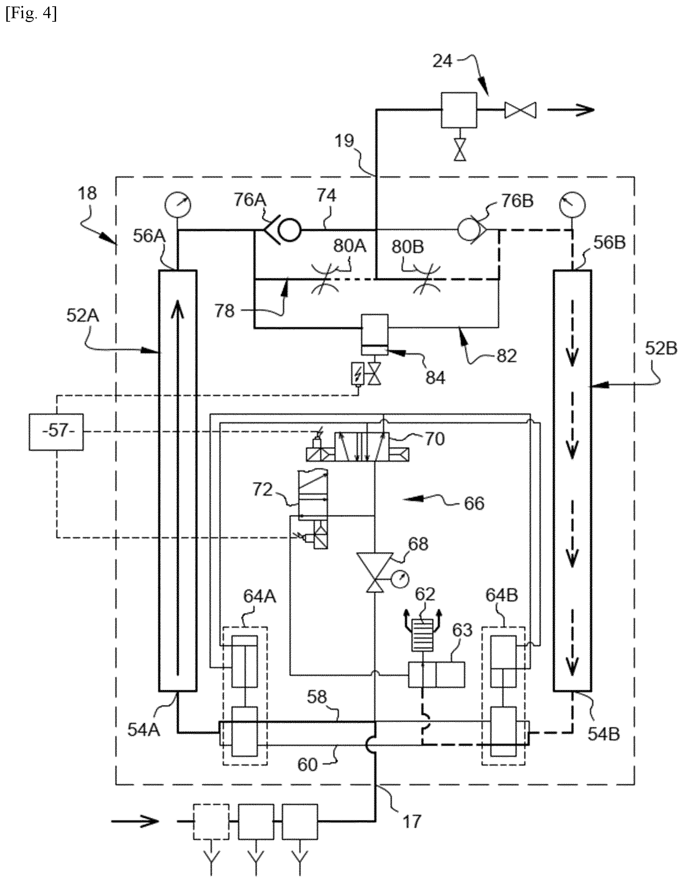

On va maintenant décrire, en lien avec la Figure 4, un exemple d'un sécheur 18 pouvant être mis en œuvre dans l'une quelconque des installations 10 décrites ci-dessus. Le sécheur 18 décrit ci-après est un sécheur par adsorption. Chaque sécheur comporte une entrée amont 17, reliée au groupe de compression d'air 12, généralement par une ligne de filtration 22, et une sortie aval 19 qui délivre de l'air comprimé et séché au système 24 de distribution et d'utilisation, éventuellement par l'intermédiaire d'une rampe commune 23 telle que décrite en lien avec les Figures 2 et 3.

Le sécheur 18 représenté à la Figure 4 comprend au moins une première colonne de séchage 52A et au moins une deuxième colonne de séchage 52B, montées en parallèle. Sur la Figure 4, on a illustré le cas d'un sécheur comprenant une unique première colonne de séchage 52A et une unique deuxième colonne de séchage 52B montées en parallèle. Cependant, la première colonne de séchage 52A et la deuxième colonne de séchage 52B peuvent être réalisées chacune sous la forme de plusieurs colonnes élémentaires de séchage, les colonnes élémentaires étant montées entre elles en parallèle et/ou en série, pour former collectivement respectivement la première colonne de séchage 52A et la deuxième colonne de séchage 52B.

Chaque colonne de séchage 52A, 52B comprend un récipient, généralement en forme de tube allongé selon un axe longitudinal, cet axe étant généralement orienté verticalement, et comporte un port primaire 54A, 54B et un port secondaire 56A, 56B qui définissent un chemin de circulation d'air au travers de la colonne de séchage. Le port primaire 54A, 54B et le port secondaire 56A, 56B sont généralement situés chacun à une extrémité longitudinale de la colonne, définissant ainsi un trajet qui peut être rectiligne selon la direction longitudinale entre le port primaire 54A, 54B et le port secondaire 56A, 56B. Lorsque la colonne de séchage 52A, 52B est orientée verticalement, le port primaire 54A, 54B est généralement à l'extrémité inférieure de la colonne et le port secondaire 56A, 56B à l'extrémité supérieure de la colonne. Chaque colonne de séchage 52A, 52B est remplie d'un substrat capable de retenir l'humidité comprise dans l'air, notamment par adsorption, et de laisser passer l'air sec résiduel résultant de la séparation.

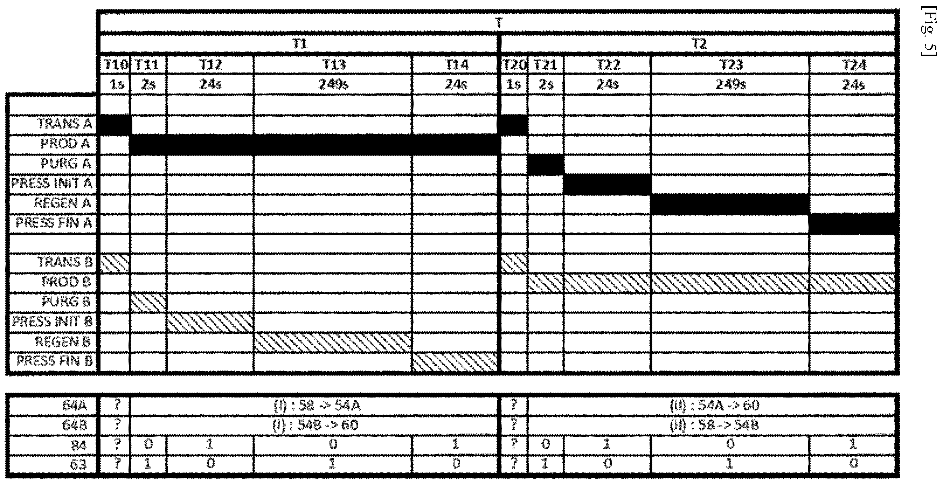

Comme illustré schématiquement par le tableau de la Figure 5, chaque colonne de séchage 52A, 52B est soumise à une répétition cyclique de cycles de colonne comprenant chacun un demi-cycle de production et un demi-cycle de régénération pour la colonne de séchage considérée. Le demi-cycle de production comprend au moins un temps de séchage d'air (PROD A, PROD B), au cours duquel de l'air comprimé humide, en provenance du groupe de compression d'air 12, le cas échant après passage dans le groupe de filtration 20, circule selon une première direction au travers de la colonne de séchage considérée, depuis le port primaire 54A, 54B vers le port secondaire 56A, 56B. On note que l'air humide peut être de l'air présentant déjà un niveau d'humidité très faible. Après passage au travers de la colonne de séchage, la quantité d'humidité dans l'air a été abaissée et l'air comprimé sortant par le port secondaire 56A, 56B, qui peut être considéré comme de l'air sec par comparaison avec l'air à l'entrée de la colonne de séchage, peut être dirigé vers la sortie aval 19 du sécheur, donc vers le système 24 de distribution et d'utilisation, éventuellement par l'intermédiaire d'une rampe commune 23 le cas échéant. L'air qui entre selon la première direction dans la colonne de séchage considérée, par le port primaire 54A, 54B, est considéré comme de l'air humide par comparaison avec l'air qui ressort de la colonne de séchage considérée par le port secondaire 56A, 56B. L'air sec sortant par le port secondaire 56A, 56B pendant un temps de séchage d'air (PROD A, PROD B) peut bien entendu comporter des traces d'humidité.

Le demi-cycle de régénération comprend au moins un temps de régénération (REGEN A, REGEN B), pendant lequel on fait circuler de l'air sec selon une seconde direction, inverse de la première direction, au travers de la colonne de séchage 52A, 52B considérée. Cet air sec est généralement de l'air provenant d'une autre colonne de séchage que la colonne de séchage 52A, 52B considérée, est introduit dans la colonne de séchage 52A, 52B considérée par son port secondaire 56A, 56B, et est évacué de la colonne de séchage considérée par le port primaire 54A, 54B, après avoir traversé la colonne de séchage 52A, 52B considérée. Dans certains modes de réalisation, cet air sec peut, ou moins dans certains modes opératoires, être en tout ou partie de l'air sec provenant du système 24 de distribution et d'utilisation, notamment de l'accumulateur d'air sous pression 26. L'air sec introduit par le port secondaire 56A, 56B, en traversant la colonne de séchage 52A, 52B considérée en cours de régénération, provoque le relâchement de l'humidité précédemment stockée dans cette colonne, et est ensuite évacué hors de la colonne par le port primaire 54A, 54B.

De manière connue, dans un sécheur 18 donné, la première colonne de séchage 52A et la deuxième colonne de séchage 52B opèrent en opposition de demi-cycles, au sens que lorsque la première colonne de séchage 52A est dans son demi-cycle de production, la deuxième colonne de séchage 52B est dans son demi-cycle de régénération, et inversement. Ainsi, pour un sécheur 18 donné, il y a toujours une colonne de séchage qui est dans son demi-cycle de production et qui peut donc fournir, au niveau de sa sortie aval 19, de l'air comprimé sec à destination du système 24 de distribution et d'utilisation.

Ainsi, la première colonne de séchage 52A est prévue, pendant un demi-cycle T1, pour sécher l'air comprimé issu du groupe de compression d'air 12 tandis que la deuxième colonne de séchage 52B est régénérée par une portion de l'air comprimé séché issue de la première colonne de séchage 52A, et, au cours du demi-cycle T2 immédiatement suivant, la deuxième colonne de séchage 52B est prévue pour sécher l'air issu du groupe de compression d'air 12 tandis que la première colonne de séchage 52A est régénérée par une portion de l'air comprimé séché issue de la deuxième colonne 52B.

Le sécheur 18 comporte des moyens de circulation et commutation d'air pour organiser la circulation d'air dans le sécheur 18, pendant chaque cycle. Les moyens de circulation et commutation d'air comprennent des tubulures de circulation de l'air comprimé, les tubulures reliant entre eux au moins deux parmi l'entrée amont 17 du sécheur 18, les ports primaires 54A, 54B des colonnes de séchage, les ports secondaires 56A, 56B des colonnes de séchage, la sortie aval 19 du sécheur 18, et une évacuation d'air 62 du sécheur 18. Les moyens de circulation et commutation d'air comprennent aussi des vannes à commande externe pour sélectivement permettre, restreindre ou interdire la circulation de l'air comprimé dans certaines au moins de ces tubulures, sur la base d'une commande externe. Par vanne à commande externe, on entend une vanne dont l'état peut être modifié par une commande externe délivrée par une unité électronique de commande, soit directement s'il s'agit d'une vanne à commande électrique ou électromagnétique, soit indirectement s'il s'agit d'une vanne à commande pneumatique ou hydraulique. Les moyens de circulation et commutation d'air peuvent aussi comprendre des éléments tels que des vannes anti-retour telles que des clapets anti-retour, et/ou des limiteurs de débit, et/ou des régulateurs de pression, etc.... Certains de ces éléments peuvent être des éléments passifs, susceptibles de changer d'état sans commande externe, comme les vannes anti-retours décrites plus loin.

Dans l'exemple illustré sur la Figure 4, les moyens de circulation et commutation d'air comportent une unité électronique de commande 57 qui peut être une unité dédiée aux moyens de circulation et communication d'air ou qui peut être une partie d'une unité électronique de commande ayant d'autres fonctions au sein du sécheur 18, du groupe de séchage 16, et/ou de l'installation 10.

Dans l'exemple illustré à la Figure 4, les moyens de circulation et commutation d'air comprennent une partie primaire, en liaison avec les ports primaires 54A, 54B des deux colonnes de séchage 52A, 52B, et une partie secondaire, en liaison avec les ports secondaires 56A, 56B.

Dans la partie primaire des moyens de circulation et commutation d'air, on trouve une galerie d'entrée 58 qui est directement reliée à l'entrée amont 17 du sécheur 18, et qui est donc alimentée en air comprimé issu du groupe de compression d'air 12, après passage le cas échéant dans le groupe de filtration 22. La galerie d'entrée 58 est donc à tout moment emplie de l'air comprimé délivré par le groupe de compression, cet air comprimé étant considéré comme étant humide, et la pression dans la galerie d'entrée 58 est considérée comme étant, en fonctionnement, égale à la pression à l'entrée amont 17 du sécheur 18, donc à la pression délivrée à l'instant donné par le groupe de compression d'air 12, après passage, le cas échéant, dans le groupe de filtration 22.

Dans la partie primaire, on trouve aussi une galerie d'évacuation 60 qui est reliée à l'évacuation d'air 62 du sécheur 18, avec interposition, entre la galerie d'évacuation 60 et l'évacuation d'air 62, d'une vanne d'évacuation 63 à commande externe. La vanne d'évacuation 63, qui appartient donc à la partie primaire des moyens de circulation et commutation d'air, est par exemple une vanne de type tout ou rien, qui est soit dans un état ouvert, laissant passer l'air vers l'évacuation d'air 62, soit dans un état fermé, bloquant tout passage d'air vers l'évacuation d'air 62. Cependant, on peut en alternative prévoir que la vanne d'évacuation 63 soit une vanne proportionnelle pouvant être dans un état ouvert, dans un état fermé, et dans un état intermédiaire, partiellement ouvert.

Dans la partie primaire, les moyens de circulation et commutation d'air comprennent un système de distribution primaire, à commande externe unique. Comme on verra, ce système de distribution primaire consiste en un système de vannes qui peut être réalisé soit sous la forme de plusieurs vannes discrètes, aptes chacune à contrôler la circulation entre une seule entrée et une seule sortie de la vanne, soit sous la forme d'un ou plusieurs distributeurs aptes chacun à contrôler la circulation entre une entrée et plusieurs sorties du distributeur, ou entre plusieurs entrées et une sortie du distributeur, ou entre plusieurs entrées et plusieurs sorties du distributeur. Le système de distribution primaire est à commande externe unique en ce sens qu'il est commandé par une unique commande externe, laquelle est délivrée, à un instant donné, par une unité électronique de commande. Là encore, le système de distribution primaire peut être à commande électrique ou électromagnétique, auquel cas il peut être commandé directement par l'unité électronique de commande 57, ou à commande pneumatique ou hydraulique, auquel cas il est commandé par l'unité électronique de commande 57 au travers d'un circuit de pilotage pneumatique ou hydraulique.

Le système de distribution primaire présente un premier état (I) dans lequel le port primaire 54A de la première colonne de séchage 52A est relié à la galerie d'entrée 58 et dans lequel le port primaire 54B de la deuxième colonne de séchage 52B est relié à la galerie d'évacuation 60. Le système de distribution primaire présente un deuxième état (II) dans lequel le port primaire 54A de la première colonne de séchage 52A est relié à la galerie d'évacuation 60 et le port primaire 54B de la deuxième colonne de séchage 52B est relié à la galerie d'entrée 58.

Dans l'exemple illustré à la Figure 4, le système de distribution primaire est réalisé sous la forme de deux distributeurs 64A, 64B à commande pneumatique, chacun dédié au port primaire 54A, 54B d'une des deux colonnes de séchage. Ainsi, le système de distribution primaire comporte un premier distributeur de sélection 64A qui, dans un premier état (I), met en communication le port primaire 54A de la première colonne de séchage 52A avec la galerie d'entrée 58, et qui, dans un deuxième état (II), met en communication le port primaire 54A de la première colonne de séchage 52A avec la galerie d'évacuation 60. Le système de distribution primaire comporte un deuxième distributeur de sélection 64B qui, dans un premier état (I), met en communication le port primaire 54B de la deuxième colonne de séchage 52B avec la galerie d'évacuation 60, et qui, dans un deuxième état (II), met en communication le port primaire 54B de la deuxième colonne de séchage 52B avec la galerie d'entrée 58. Le système de distribution primaire est à commande externe unique en ce sens que le premier distributeur de sélection 64A et le deuxième distributeur de sélection 64B sont à chaque instant et simultanément soit dans leur premier état (I), soit dans leur deuxième état (II), et que le basculement des deux distributeurs de leur état (I) vers leur état (II), et inversement, est commandé par une même commande externe. Dans l'exemple, le premier distributeur de sélection 64A et le deuxième distributeur de sélection 64B sont de type tout ou rien, ne présentant que les deux états ci-dessus. On peut prévoir que le premier distributeur de sélection 64A et le deuxième distributeur de sélection 64B soient des distributeurs bistables, pouvant, en l'absence de commande externe, rester soit dans le premier état soit dans le deuxième état, ou qu'au contraire ce soient des distributeurs monostables, ramenés automatiquement dans l'un parmi le premier état et le deuxième état, par exemple par un ressort mécanique ou pneumatique.

Dans l'exemple illustré à la Figure 4, le premier distributeur de sélection 64A et le deuxième distributeur de sélection 64B sont des distributeurs à commande pneumatique qui sont donc commandés par l'intermédiaire d'un circuit de pilotage pneumatique 66. Le circuit de pilotage pneumatique 66 est alimenté de préférence directement depuis la galerie d'entrée 58, éventuellement avec interposition d'un détendeur ou réducteur de pression 68. Le circuit de pilotage pneumatique 66 comporte une vanne de pilotage des distributeurs 70 elle-même à commande électrique ou électromagnétique. La vanne de pilotage des distributeurs 70 est commandée par l'unité électronique de commande 57 pour piloter le premier distributeur de sélection 64A et le deuxième distributeur de sélection 64B soit dans leur premier état (I), soit dans leur deuxième état (II).

Dans cet exemple, le premier distributeur de sélection 64A et le deuxième distributeur de sélection 64B sont donc chacun des distributeurs de type « 3/2 », c'est-à-dire avec trois entrées ou sorties, et deux états. Le premier distributeur de sélection 64A et le deuxième distributeur de sélection 64B peuvent être, comme dans l'exemple illustré schématiquement à la Figure 4, des composants physiques distincts, chacun reliés au circuit de pilotage pneumatique 66. Cependant, on peut tout à fait prévoir de réaliser le système de distribution primaire sous la forme d'un unique distributeur assurant les mêmes fonctions, par exemple sous la forme d'un distributeur de type « 4/2 » avec quatre entrées ou sorties, et deux états.

Dans l'exemple illustré à la Figure 4, la vanne d'évacuation 63 est elle aussi une vanne à commande pneumatique, ici de type tout ou rien, qui est commandée par l'intermédiaire d'une vanne de pilotage d'évacuation 72 qui fait partie du circuit de pilotage pneumatique 66 et qui est elle aussi commandée par l'unité électronique de commande 57 pour piloter la vanne d'évacuation 63 soit dans un état ouvert (1), laissant communiquer la galerie d'évacuation 58 avec l'évacuation 62, soit dans un état fermé (0), interrompant une telle communication. Dans l'exemple, l'évacuation d'air 62 est avantageusement équipée d'un silencieux.

En résumé, la partie primaire des moyens de circulation et commutation d'air, telle que décrite ci-dessus, qui comporte d'une part un système de distribution primaire 64A, 64B à commande externe unique présentant un premier état (I) dans lequel le port primaire 54A de la première colonne de séchage 52A est relié à la galerie d'entrée 58 et dans lequel le port primaire 54B de la deuxième colonne de séchage 52B est relié à la galerie d'évacuation 60, et un deuxième état (II) dans lequel le port primaire 54A de la première colonne de séchage 52A est relié à la galerie d'évacuation 60 et dans lequel le port primaire 54B de la deuxième colonne de séchage 52B est relié à la galerie d'entrée 58, et qui comporte d'autre part une vanne commandée d'évacuation 63, entre la galerie d'évacuation 60 et l'évacuation d'air 62, qui est ouverte pendant les temps de régénération (T13 - REGEN B, T23 - REGEN A) et qui est fermée pendant les temps de mise en pression, est particulièrement avantageuse en soi, en termes de coûts et de facilité de mise en œuvre, pour permettre certaines fonctionnalités décrites dans cette demande, notamment les temps de régénération et de mise en pression initiale tels que décrits ci-après. De plus, la mise en œuvre des distributeurs 64A, 64B à commande pneumatique, commandés par un circuit de pilotage pneumatique 66 lui-même commandé électriquement, permet de mettre en œuvre des composants particulièrement fiables, en dépit des niveaux de pression dans le sécheur 18, qui peuvent être supérieurs à 10 bars absolus.

Dans la partie secondaire des moyens de circulation et commutation d'air, on trouve une galerie de sortie 74 qui est directement reliée à la sortie aval 19 du sécheur 18, et qui donc délivre de l'air sous pression au système 24 de distribution et d'utilisation.

La galerie de sortie 74 est reliée respectivement au port secondaire 56A, 56B, de chacune des première et deuxième colonnes de séchage 52A, 52B, par une vanne anti-retour 76A, 76B correspondante, autorisant chacune respectivement la circulation d'air comprimé uniquement depuis le port secondaire 56A, 56B vers la galerie de sortie 74. Dans cet exemple, les vannes anti-retour 76A, 76B sont des vannes passives, non commandées. Chaque vanne anti-retour 76A, 76B est par exemple réalisée sous la forme d'un clapet anti-retour.

La partie secondaire des moyens de circulation et de commutation d'air comporte par ailleurs une liaison à section de passage limitée 78 entre les ports secondaires 56A, 56B de chacune des première et deuxième colonnes de séchage 52A, 52B.

Dans le présent texte, on considère, de manière conventionnelle pour l'homme du métier, que la section de passage dans une tubulure ou dans une vanne ou un distributeur, ou plus généralement entre deux points du dispositif, est la section de passage minimale, dans cette tubulure ou dans cette vanne ou ce distributeur, ou plus généralement entre ces deux points du dispositif, qui limite, à conditions opératoires données, le débit d'air comprimé dans cette tubulure ou dans cette vanne ou ce distributeur, ou plus généralement entre ces deux points du dispositif.

Une telle liaison à section de passage limitée 78 peut prendre diverses formes. Dans l'exemple, cette liaison à section limitée 78 est réalisée sous la forme de deux dérivations à section de passage limitée qui relient chacune respectivement le port secondaire 56A, 56B de l'une des première et deuxième colonnes de séchage 52A, 52B avec la galerie de sortie 74, chacune en parallèle de la vanne anti-retour 76A, 76B correspondante. Chaque dérivation à section limitée comporte un limiteur de section de passage, par exemple sous la forme d'un orifice calibré 80A, 80B. On note que cette dérivation à section de passage limitée pourrait être intégrée à la vanne anti-retour 76A, 76B correspondante, dans un même composant physique. Cependant, cette liaison à section de passage limitée 78 pourrait être réalisée par une tubulure parallèle reliant directement les ports secondaires 56A, 56B, de chacune des première et deuxième colonnes de séchage 52A, 52B, une telle tubulure parallèle étant avantageusement équipé d'un limiteur de section de passage, par exemple sous la forme d'un orifice calibré.

Comme illustré sur la Figure 4, la partie secondaire des moyens de circulation et de commutation d'air comporte par ailleurs une liaison commandée d'accroissement de section de passage 82 entre les ports secondaires 56A, 56B de chacune des première et deuxième colonnes de séchage 52A, 52B. La liaison commandée d'accroissement de section de passage 82 permet, lorsqu'elle ouverte, d'obtenir une circulation d'air comprimé entre les deux colonnes de séchage52A, 52B, qui, à conditions opératoires identiques, atteint un débit d'air, entre les deux colonnes de séchage52A, 52B, qui est supérieur au débit d'air susceptible de transiter par la liaison à section de passage limitée 78 seule. Comme cela sera expliqué par la suite, cette liaison commandée d'accroissement de section de passage 82 est utilisée pour une opération de mise en pression rapide d'une colonne de séchage lors de son demi-cycle de régénération.

Une telle liaison commandée d'accroissement de section de passage 82 peut prendre diverses formes.

Dans l'exemple, la liaison commandée d'accroissement de section de passage 82 est réalisée sous la forme d'une tubulure reliant directement les ports secondaires 56A, 56B, de chacune des première et deuxième colonnes de séchage 52A, 52B, cette tubulure étant équipée d'une vanne de mise en pression rapide 84, à commande externe.

Dans l'exemple illustré, la liaison commandée d'accroissement de section de passage 82 est agencée en parallèle de la galerie de sortie 74 et des vannes anti-retour 76A, 76B.

Dans l'exemple illustré, la liaison commandée d'accroissement de section de passage 82 est donc agencée en parallèle de la liaison à section de passage limitée 78.

La vanne de mise en pression rapide 84, qui appartient donc à la partie secondaire des moyens de circulation et commutation d'air, est par exemple une vanne de type tout ou rien, qui est soit dans un état ouvert (1), soit dans un état fermé (0). Cependant, on peut en alternative prévoir que la vanne mise en pression rapide 84 soit une vanne proportionnelle pouvant être dans un état ouvert, dans un état fermé, et dans un état intermédiaire, partiellement ouvert. Dans son état fermé (0), la vanne de mise en pression rapide 84 interrompt toute circulation dans la liaison commandée d'accroissement de section de passage 82. Dans son état ouvert (1), la vanne de mise en pression rapide 84 permet la circulation, au travers de la liaison commandée d'accroissement de section de passage 82, d'un flux d'air comprimé entre les deux colonnes de séchage 52A, 52B, avec un débit total entre les deux colonnes de séchage 52A, 52B qui est supérieur à celui permis, dans des conditions opératoires identiques, par la liaison à section de passage limitée 78 seule. La vanne de mise en pression rapide 84 est commandée par l'unité électronique de commande 57. Dans l'exemple illustré, la vanne de mise en pression rapide 84 est une vanne à commande électrique qui peut donc être pilotée directement par l'unité électronique de commande 57. Cependant, on pourrait choisir de réaliser la vanne de mise en pression rapide 84 sous la forme d'une vanne à commande pneumatique ou hydraulique, par l'intermédiaire d'un circuit de pilotage approprié, éventuellement par l'intermédiaire du circuit de pilotage 66 décrit ci-dessus.

En variante, la liaison commandée d'accroissement de section de passage 82 et la liaison à section de passage limitée 78 pourraient être réalisées sous la forme d'une tubulure reliant directement les ports secondaires 56A, 56B, de chacune des première et deuxième colonnes de séchage 52A, 52B, cette tubulure étant équipée d'une vanne de mise en pression rapide 84, à commande externe, à au moins deux états, dont un premier état détermine une première section de passage dans cette tubulure et un second étant détermine une seconde section de passage dans cette même tubulure.

On va maintenant décrire, notamment en référence à la Figure 5, un procédé de régénération pour une colonne de séchage d'un sécheur 18.

Comme expliqué plus haut, le sécheur 18 opère cycliquement selon une répétition cyclique de cycles T, la première et la deuxième colonne de séchage 52A, 52B opérant en opposition de demi-cycles, l'une des colonnes de séchage étant dans son demi-cycle de régénération tandis que l'autre des deux colonnes de séchage est dans son demi-cycle de production.

Dans l'exemple illustré à la Figure 5, pour un cycle T donné, une première partie de cycle T1 pour le sécheur 18 correspond à un demi-cycle de production pour la première colonne de séchage 52A et à un demi-cycle de régénération pour la deuxième colonne de séchage 52B. Une deuxième partie de cycle T2 pour le sécheur 18 correspond à un demi-cycle de production pour la deuxième colonne 52B de séchage et à un demi-cycle de régénération pour la première colonne de séchage 52A.

Pendant la première partie de cycle T1 pour le sécheur 18, le système de distribution primaire 64A, 64B est dans son premier état (I) dans lequel le port primaire 54A de la première colonne de séchage 52A est relié à la galerie d'entrée 58 et le port primaire 54B de la deuxième colonne de séchage 52B est relié à la galerie d'évacuation 60. Pendant la deuxième partie de cycle T2 pour le sécheur 18, le système de distribution primaire est dans son deuxième état (II) dans lequel le port primaire 54A de la première colonne de séchage 52A est relié à la galerie d'évacuation 60 et le port primaire 54B de la deuxième colonne de séchage 52B est relié à la galerie d'entrée 58.

Si l'on prend plus particulièrement l'exemple du demi-cycle de régénération pour la deuxième colonne de séchage 52B (respectivement du demi-cycle de régénération pour la première colonne de séchage 52A), pendant la première partie de cycle T1 (respectivement la deuxième partie de cycle T2) pour le sécheur 18, on voit que le demi-cycle de régénération d'une colonne de séchage peut présenter plusieurs temps.

Principalement, le demi-cycle de régénération d'une colonne de séchage considérée 52B (respectivement 52A) comprend, pour cette colonne de séchage considérée, un temps de régénération T13 - REGEN B (respectivement T23 - REGEN A) pendant lequel la vanne d'échappement 63 est dans son état ouvert, laissant le flux d'air sortant de la colonne de séchage considérée, celle qui en cours de régénération, ce flux d'air sortant du port primaire correspondant 54B (respectivement 54A), s'évacuer au travers de l'évacuation d'air 62.

Pendant ce temps de régénération T13 (respectivement T23), la vanne de mise en pression rapide 84 est dans son état fermé (0), ne laissant passer aucun débit d'air dans la liaison commandée d'accroissement de section de passage 82. Dans ces conditions, illustrées plus particulièrement à la Figure 4, on comprend que la première colonne de séchage 52A (respectivement la deuxième colonne de séchage 52B) est dans un temps de séchage d'air (PROD A, respectivement PROD B) pendant lequel l'air comprimé, généré par le groupe de compression d'air 12 et considéré comme dans un état humide, est fourni, par la galerie d'entrée 58, au port primaire 54A de la première colonne de séchage 52A (respectivement au port primaire 54B de la deuxième colonne de séchage 52B). Cet air circule selon une première direction au travers de la première colonne de séchage 52A (respectivement la deuxième colonne de séchage 52B) jusqu'à ressortir, dans un état que l'on considère sec, par le port secondaire 56B de la première colonne de séchage 52A (respectivement de la deuxième colonne de séchage 52B). Une majorité de cet air comprimé sec passe au travers de la vanne anti-retour 76A (respectivement 76B) pour aller dans la galerie de sortie 74 et être délivré au système 24.

Toutefois, pendant ce temps de régénération T13 pour la deuxième colonne de séchage 52B (respectivement pendant le temps de régénération T23 pour la première colonne de séchage 52A), une partie de cet air comprimé sec qui est présent dans la galerie de sortie 74 passe par l'orifice calibré 80B (respectivement 80A) formant la section de passage limitée 78, en direction du port secondaire 56B de la deuxième colonne de séchage 52B (respectivement en direction du port secondaire 56A de la première colonne de séchage 52A). Cette fraction de l'air comprimé sec, pendant le temps de régénération T13 (respectivement T23) pour la deuxième colonne de séchage 52B (respectivement pour la première colonne de séchage 52A), peut circuler au travers de la deuxième colonne de séchage 52B (respectivement de la première colonne de séchage 52A) selon une direction allant du port secondaire 56B (respectivement 56A) vers le port primaire 54B (respectivement 54A), avant donc de s'évacuer par l'évacuation d'air 62 grâce à l'état ouvert de la vanne d'évacuation 63.

De manière connue, le débit de régénération est maintenu à un niveau relativement faible grâce à la section limitée formée par l'orifice calibré 80B (respectivement 80A) formant dérivation à section limitée. Cela permet de limiter la quantité d'air consommée pour la régénération de la colonne de séchage. Dans des applications habituelles, l'orifice calibré 80A, 80B est conçu de telle sorte qu'une fraction comprise entre 70 % et 90% du volume d'air issu de la colonne de séchage qui est dans son temps de séchage d'air (PROD A, respectivement PROD B) soit dirigée vers le système 24 de distribution et de consommation, tandis que la fraction restante, représentant une valeur comprise entre 5% et 30%, de préférence entre 5% et 15%, du volume d'air issu du volume d'air issu de la colonne de séchage qui est dans son temps de séchage d'air est dirigé vers la colonne de séchage qui est dans son temps de régénération (REGEN B, respectivement REGEN A).

Comme on peut le voir à la Figure 5, le procédé comporte, pour chaque colonne de séchage, pendant le demi-cycle de régénération, au moins un temps de mise en pression initiale T12 - PRESS INIT B (respectivement T22 - PRESS INIT A) avant un temps de régénération T13 - REGEN B (respectivement T23 - REGEN A).

Autrement dit, le procédé comporte, pour chaque colonne de séchage 52A, 52B, avant le temps de régénération REGEN A, REGEN B pendant le demi-cycle de régénération, au moins un temps de mise en pression initiale PRESS INIT A, PRESS INIT B pendant lequel la colonne de séchage considérée est alimentée en air comprimé pour augmenter la pression à l'intérieur de la colonne de séchage considérée jusqu'à une pression supérieure ou égale à une pression de seuil. La pression de seuil à la fin du temps de mise en pression initiale peut être une valeur prédéterminée ou être la résultante d'une durée du temps de mise en pression initiale qui peut être une durée fixée par avance, ou une durée variable, par exemple asservie à des paramètres représentatifs des conditions opératoires du sécheur 18. La pression de seuil peut être définie en référence à la pression de production, c'est-à-dire la pression dans la colonne de séchage considérée 52A, 52B pendant tout temps de séchage d'air PROD A, PROD B pour la colonne de séchage considérée (52A, 52B). La pression de production peut être mesurée au niveau du port secondaire 56A, 56B de la colonne de séchage considérée pendant un temps de séchage d'air pour la colonne de séchage considérée. Par exemple, la pression de seuil peut être définie en référence à la pression de production de la colonne de séchage considérée, notamment sous la forme d'un pourcentage prédéfini de la pression de production. Ce pourcentage prédéfini est de préférence compris dans la gamme allant de 80% à 100%. Ainsi, le procédé peut comporter, pour chaque colonne de séchage 52A, 52B, avant le temps de régénération REGEN A, REGEN B pendant le demi-cycle de régénération, au moins un temps de mise en pression initiale PRESS INIT A, PRESS INIT B pendant lequel la colonne de séchage considérée est alimentée en air comprimé pour augmenter la pression à l'intérieur de la colonne de séchage considérée jusqu'à une valeur égale à la valeur de la pression de production pour la colonne de séchage considérée.

Pendant le temps de mise en pression initiale T12 - PRESS INIT B (respectivement T22 - PRESS INIT A) d'une colonne de séchage considérée 52B (respectivement 52A), la colonne de séchage considérée est de préférence alimentée au travers d'une section de passage des moyens de circulation et commutation qui est supérieure à la section de passage des moyens de circulation et commutation au travers de laquelle la colonne de séchage considérée 52B (respectivement 52A) est alimentée pendant le temps de régénération immédiatement successif T13 REGEN B (respectivement T23 - REGEN A) pour cette colonne de séchage considérée 52B (respectivement 52A). De manière générale, cela permet d'assurer, pendant le temps de mise en pression initiale pour une colonne de séchage considérée, une débit d'air comprimé, vers cette colonne de séchage considérée, qui est supérieur au débit d'air vers cette colonne de séchage considérée pendant le temps de régénération immédiatement successif.

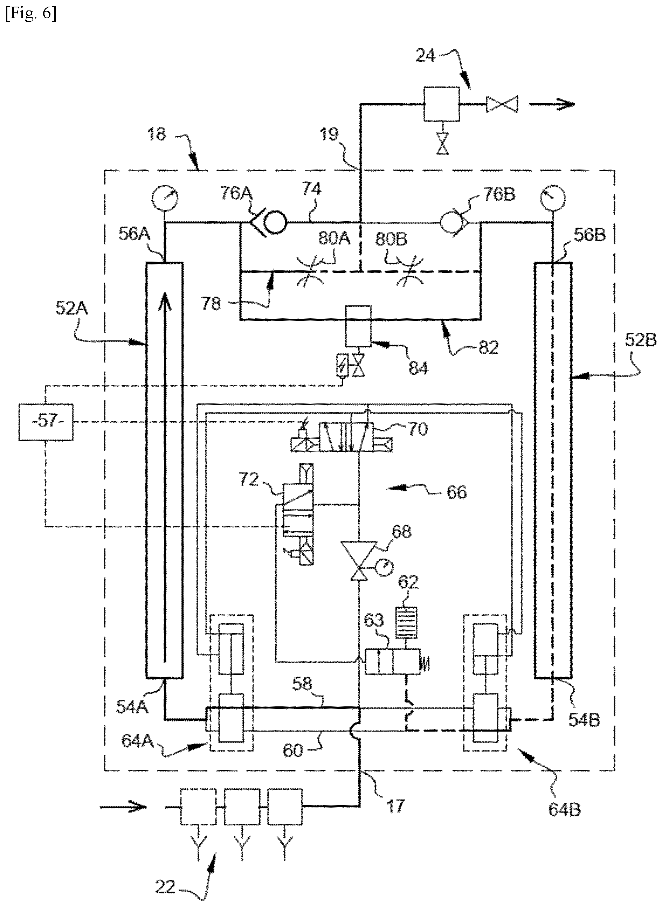

Pour une colonne de séchage considérée 52 B (respectivement 52A), le port primaire 54B (respectivement 54A) est obturé pendant le temps de mise en pression initiale et est relié à l'évacuation d'air 62 pendant le temps de régénération. Dans l'exemple illustré à la Figure 6, cette obturation du port primaire, pendant le temps de mise en pression initiale T12 - PRESS INIT B (respectivement T22 - PRESS INIT A) d'une colonne de séchage considérée 52B (respectivement 52A), est réalisée en maintenant la vanne d'échappement 63 dans son état fermé, coupant tout flux d'air sortant de la colonne de séchage considérée.

A contrario, on peut prévoir que pendant ce temps de mise en pression initiale d'une colonne de séchage considérée 52B (respectivement 52A), la vanne de mise en pression rapide 84 est dans son état ouvert, laissant donc passer un débit d'air dans la liaison commandée d'accroissement de section de passage 82. Autrement dit, dans un tel cas, le port secondaire 56B (respectivement 56A) est relié à une source d'air sec sous pression au travers d'une section de passage des moyens de circulation et de commutation d'air qui, pendant le temps de mise en pression initiale, est supérieure à la section de passage des moyens de circulation et commutation au travers de laquelle la colonne de séchage considérée est alimentée pendant le temps de régénération.

Quand il s'agit d'un temps de mise en pression initiale de la deuxième colonne de séchage considérée 52B (respectivement de la première colonne de séchage 52A), de l'air comprimé sec issu de la première colonne de séchage 52A (respectivement la deuxième colonne de séchage 52B), qui est dans un temps de séchage d'air PROD A (respectivement PROD B), est délivré au port secondaire 56B de la deuxième colonne de séchage 52B (respectivement au port secondaire 56A de la première colonne de séchage 52A), au travers de la vanne de mise en pression rapide 84 dans son état ouvert et de la liaison commandée d'accroissement de section de passage 82. On note que, pendant le temps de mise en pression initiale, une majorité de l'air comprimé sec issu de la première colonne de séchage 52A (respectivement la deuxième colonne de séchage 52B) passe au travers de la vanne anti-retour 76A (respectivement 76B) pour aller dans la galerie de sortie 74 et être délivré au système 24. On note encore que, pendant le temps de mise en pression initiale, il peut y avoir une partie, généralement minime, de cet air comprimé sec qui est présent dans la galerie de sortie 74, qui passe par l'orifice calibré 80B (respectivement 80A) formant liaison à section de passage limitée 78, en direction du port secondaire 56B de la deuxième colonne de séchage 52B (respectivement en direction du port secondaire 56A de la première colonne de séchage 52A).

Ainsi, dans l'exemple, pendant le temps de mise en pression initiale, la vanne d'évacuation 63 est commandée dans un état fermé (0) tandis que la vanne de mise en pression rapide 84 est commandée dans un état ouvert (1), et, pendant le temps de régénération, la vanne d'évacuation 63 est commandée dans un état ouvert (1) tandis que la vanne de mise en pression rapide 84 est commandée dans un état fermé (0) ou dans un état partiellement ouvert avec une section de passage inférieure à sa section de passage pendant le temps de mise en pression initiale.

En d'autre termes, dans l'exemple illustré, pendant le temps de mise en pression initiale d'une colonne de séchage considérée, la colonne de séchage considérée est alimentée au travers d'une section de passage des moyens de circulation et commutation d'air qui est égale au moins à la section de passage permise par la vanne de mise en pression rapide 84 dans son état ouvert. Dans le cas illustré, qui comporte une liaison commandée d'accroissement de section de passage 82 en parallèle d'une liaison à section de passage limitée 78, pendant le temps de mise en pression initiale d'une colonne de séchage considérée, la colonne de séchage considérée est alimentée au travers d'une section de passage des moyens de circulation et commutation d'air qui est égale à la section de passage permise par la vanne de mise en pression rapide 84 dans son état ouvert à laquelle on ajoute la section de passage de la liaison à section de passage limitée 78 (par exemple déterminée par l'orifice calibré 80A, 80B correspondant). Dans tous les cas, cette section de passage est supérieure à la section de passage des moyens de circulation et commutation au travers de laquelle la colonne est alimentée pendant son temps de régénération.

Un tel temps de mise en pression initiale, au travers d'une liaison commandée permettant un accroissement de section de passage par rapport à la liaison à section limitée, permet d'obtenir une mise en pression plus rapide pour atteindre une pression de seuil donnée, et/ou d'accroitre la pression atteinte dans la colonne qui est dans son demi-cycle de régénération sans accroitre la durée de ce temps de mise en pression initiale.

Cette mise en pression initiale précède immédiatement, pour une colonne de séchage considérée, le temps de régénération. Dans l'exemple illustré, le basculement du temps de mise en pression initiale PRESS INIT A - PRESS INIT B vers le temps de régénération REGEN A - REGEN B, se fait par ouverture de la vanne d'évacuation 63. Ainsi, au tout début du temps de régénération, la pression dans la colonne de séchage considérée est à une valeur relativement élevée. Lors de l'ouverture de la vanne d'évacuation 63, une dépressurisation rapide de cette colonne de séchage considérée est effectuée. Il a été constaté que cette dépressurisation rapide tend à faciliter la désorption et l'évacuation de l'humidité préalablement stockée dans la colonne de séchage.

On note que la durée du temps de mise en pression initiale peut être une durée fixée par avance, qui est la même à chaque demi-cycle de régénération pour la colonne de séchage considérée et qui a par exemple été déterminée à la conception et/ou dans une étape de réglage du sécheur, par exemple pour tenir compte des conditions opératoires du sécheur. Cependant, la durée du temps de mise en pression initiale peut être une durée variable, par exemple variable d'un cycle du sécheur à l'autre, par exemple asservie à l'atteinte d'une pression de seuil prédéterminée dans la colonne de séchage. Dans ce cas, on peut prévoir un capteur de mesure de pression à l'intérieur de la colonne de séchage considérée et on peut programmer l'unité électronique de commande 57 pour provoquer le basculement du temps de mise en pression initiale vers le temps de régénération lorsque la pression de seuil prédéterminée est atteinte. Selon encore une autre alternative, la durée du temps de mise en pression initiale peut être une durée variable, par exemple d'un cycle du sécheur 18 à l'autre, déterminée pour chaque cycle ou pour un certain nombre de cycles, sur la base de paramètres représentatifs des conditions opératoires du sécheur 18.

Dans tous les cas, on peut concevoir le procédé régénération de telle sorte que, à la fin du temps de mise en pression initiale, la pression dans la colonne est supérieure ou égale à la pression de production dans la colonne de séchage considérée moins 1 bar, de préférence égale à la pression de production. Dans de nombreuses installation, la pression de production dans la colonne de séchage est comprise entre 10 et 16 bars absolus.

Dans les modes de réalisation dans lesquels le temps de mise en pression initiale d'une colonne de séchage considérée 52B (respectivement 52A) est mis en œuvre avec la vanne de mise en pression rapide 84 dans son état ouvert, laissant donc passer un débit d'air dans la liaison commandée d'accroissement de section de passage 82, la durée du temps de mise en pression initiale T12 (respectivement T22) peut être de l'ordre de 3 à 15 % de la durée du demi-cycle de régénération T1 (respectivement T2) pour la colonne de séchage considérée 52B (respectivement 52A). Sur la Figure 5, on a fait figurer des valeurs de durée pour les différents temps d'un cycle T, le cycle T ayant une durée de 600 secondes, et chaque demi-cycle de production ou de régénération ayant une durée de 300 secondes. Dans cet exemple, la durée du temps de régénération T13 (respectivement T23) pour la colonne de séchage considérée 52B (respectivement 52A) est de 249 secondes tandis que la durée du temps de mise en pression initiale T12 (respectivement T22) est de 24 secondes.

Dans l'exemple illustré, la section augmentée déterminée par la liaison commandée d'accroissement de section de passage 82, lorsque vanne de mise en pression rapide 84 est dans son état ouvert, est une section prédéterminée, correspondant à la section au travers de la vanne de mise en pression rapide 84 dans son état ouvert. Ceci peut être mis en œuvre avec une vanne de mise en pression rapide 84 de type tout ou rien. Cependant, par exemple en mettant en œuvre une vanne de mise en pression rapide 84 proportionnelle, on pourrait prévoir que la section augmentée, déterminée par la liaison commandée d'accroissement de section de passage 82, lorsque la vanne de mise en pression rapide 84 est dans un état ouvert, soit une valeur variable, par exemple sur la base de paramètres représentatifs des conditions opératoires du sécheur 18.

Par ailleurs, il est connu de prévoir, après le temps de régénération pour une colonne de séchage considérée, et avant le temps de séchage d'air immédiatement suivant pour la colonne d'air considérée, un temps de mise en pression finale pendant lequel la colonne de séchage considérée est alimentée en air comprimé pour amener la pression à l'intérieur de la colonne de séchage à une pression supérieure ou égale à une pression de seuil, par exemple pour amener la pression à l'intérieur de la colonne de séchage à une pression égale à la pression de production pour la colonne de séchage considérée. Un tel temps de mise en pression finale, survenant après le temps de régénération et avant le temps de séchage d'air immédiatement suivant pour la colonne d'air considérée, sert, comme expliqué plus haut, à éviter ou limiter la propagation d'une onde de pression au travers de la colonne de séchage considérée, lors du basculement dans le temps de séchage d'air. Ainsi, dans l'exemple illustré à la Figure 5, le procédé comporte, pour chaque colonne de séchage, pendant le demi-cycle de régénération d'une colonne de séchage considérée 52B (respectivement 52A), au moins un temps de mise en pression finale T14 PRESS FIN B (respectivement T24 - PRESS FIN A) après le temps de régénération REGEN B (respectivement REGEN A) pour cette colonne de séchage considérée. Pendant ce temps de mise en pression finale PRESS FIN B (respectivement PRESS FIN A) la colonne de séchage considérée (52A, 52B) est alimentée en air comprimé pour augmenter la pression à l'intérieur de la colonne de séchage considérée (52A, 52B) jusqu'à une pression supérieure ou égale à une pression de seuil, par exemple pour amener la pression à l'intérieur de la colonne de séchage considérée à une pression égale à la pression de production pour la colonne de séchage considérée. La pression de seuil à la fin du temps de mise en pression finale T14 PRESS FIN B (respectivement T24 - PRESS FIN A) peut être la même que celle à la fin du temps de mise en pression initiale, ou peut être différente. Comme vu plus haut pour le temps de mise en pression initiale, La pression de seuil à la fin du temps de mise en pression finale T14 PRESS FIN B (respectivement T24 - PRESS FIN A) peut être une valeur prédéterminée ou être la résultante d'une durée du temps de mise en pression finale qui peut être une durée fixée par avance, ou une durée variable, par exemple asservie à des paramètres représentatifs des conditions opératoires du sécheur 18. De préférence la pression de seuil à la fin du temps de mise en pression finale T14 PRESS FIN B (respectivement T24 - PRESS FIN A) est inférieure ou égale à la pression de production, de préférence égale à la pression de production. Dans les modes de réalisation dans lesquels le temps de mise en pression finale d'une colonne de séchage considérée 52B (respectivement 52A) est mis en œuvre avec la vanne de mise en pression rapide 84 dans son état ouvert, laissant donc passer un débit d'air dans la liaison commandée d'accroissement de section de passage 82, la durée du temps de mise en pression finale T14 (respectivement T24) peut être de l'ordre de 3 à 15 % de la durée du demi-cycle de régénération T1 (respectivement T2) pour la colonne de séchage considérée 52B (respectivement 52A). Sur la Figure 5, on a fait figurer des valeurs de durée pour les différents temps d'un cycle T, le cycle T ayant une durée de 600 secondes, et chaque demi-cycle de production ou de régénération ayant une durée de 300 secondes. Dans cet exemple, la durée du temps de régénération T13 (respectivement T23) pour la colonne de séchage considérée 52B (respectivement 52A) est de 249 secondes tandis que la durée du temps de mise en pression finale T14 (respectivement T24) est de 24 secondes.

De préférence, les moyens de circulation et de commutation d'air du sécheur sont, pendant une telle étape de mise en pression finale, dans le même état que lors d'une étape de mise en pression initiale, tel que décrit ci-dessus. En revanche, de préférence, à la fin d'une telle étape de mise en pression finale, la vanne d'échappement 63 reste dans son état fermé, pour maintenir la colonne de séchage considérée, qui vient d'être régénérée, sous une pression supérieure à la pression atmosphérique, ce qui prépare le basculement, pour cette colonne de séchage considérée, du temps de régénération d'un demi-cycle de régénération au demi-cycle de production immédiatement suivant.

Dans les exemples, il est de plus prévu, au début de chaque demi-cycle de production et de chaque demi-cycle de régénération, un temps de transition T10, T20, par exemple d'une durée de l'ordre de la seconde pouvant aller à par exemple d'une demie seconde à trois secondes. Ce temps de transition T10, T20 correspond à un temps de basculement et d'équilibrage des pressions dans les différents éléments des moyens de circulation et de commutation d'air, par exemple notamment un temps au moins égal au temps de basculement du système de distribution primaire 64A, 64B, pour que celui-ci atteigne l'état correspondant au début de chaque demi-cycle. Pendant un tel temps de transition, on peut choisir de maintenir de préférence la vanne d'évacuation 63 dans son état fermé.

On note donc que l'air accumulé dans la colonne de séchage pendant son temps de mise en pression finale n'est pas évacué vers l'évacuation d'air, mais est au contraire dirigé, lors du demi-cycle de production immédiatement suivant pour cette même colonne de séchage considérée, vers le système 24 de distribution et d'utilisation. Au contraire, une majeure partie de l'air accumulé dans la colonne de séchage pendant son temps de mise en pression initiale est évacué vers l'évacuation d'air 62, et n'est donc pas dirigé vers le système 24 de distribution et d'utilisation. Toute l'humidité éventuellement contenue dans cet air est donc évacuée vers l'évacuation d'air.

Dans l'exemple illustré à la Figure 5, le procédé comporte, pour chaque colonne de séchage, pendant le demi-cycle de régénération d'une colonne de séchage considérée 52B (respectivement 52A), avant le temps de mise en pression initiale PRESS INIT B ( respectivement PRESS INIT A) d'un cycle de régénération donné, mais après le temps de séchage d'air PROD B (respectivement PROD A) du demi-cycle de production immédiatement précédent pour la colonne de séchage considérée 52B (respectivement 52A), un temps de dépressurisation T11 - PURG B (respectivement T21 - PURG A) pendant lequel la pression dans la colonne de séchage considérée est amenée à un niveau bas, par exemple inférieur à 1,2 bars relatifs par rapport à la pression atmosphérique, par exemple égal à la pression atmosphérique. Un avantage d'un tel temps de dépressurisation est qu'il permet d'évacuer l'air précédemment contenu dans la colonne de séchage considérée. On peut en effet considérer que cet air, qui est celui à l'intérieur de la colonne de séchage en fin du temps de séchage d'air précédent, contient une certaine quantité d'humidité due au fait que, à cet instant de fonctionnement, la capacité de la colonne de séchage à adsorber l'humidité aura diminué du fait de l'humidité précédemment adsorbée. On note cependant que cette quantité d'humidité est malgré tout généralement très faible. Par exemple, pendant un tel temps de dépressurisation pour une colonne de séchage considérée, le port primaire 54A, 54B de la colonne de séchage considérée est relié à l'évacuation d'air 62, la vanne d'évacuation 63 étant dans son état ouvert laissant passer l'air vers l'évacuation d'air 62. Le temps de dépressurisation T11 - PURG B (respectivement T21 - PURG A) peut par exemple avoir une durée comprise entre 1 et 10 secondes, par exemple entre 2 et 6 secondes. Un telle durée permet de garantir l'atteinte du niveau bas de pression et reste suffisamment courte pour ne pas raccourcir exagérément le temps disponible pour les autres opérations.

Pour faciliter la purge de l'air précédemment contenu dans cette colonne de séchage considérée, on peut prévoir par ailleurs, mais cela n'est pas obligatoire, que la vanne de mise en pression rapide 84 soit elle aussi dans son état ouvert. Si tel est le cas, pendant le temps de dépressurisation pour une colonne de séchage considérée, la colonne de séchage considérée est alimentée au travers d'une section de passage des moyens de circulation et commutation qui est supérieure à la section de passage des moyens de circulation et commutation au travers de laquelle la colonne est alimentée pendant le temps de régénération. Cela permet d'accélérer la purge de l'air précédemment contenu dans la colonne de séchage considérée.

Dans l'exemple illustré à la Figure 5, le procédé comporte, pour un cycle de colonne pour une colonne de séchage considérée, un unique temps de mise en pression initiale précédant un temps de régénération. D'ailleurs, le procédé comporte, pour un cycle de colonne pour une colonne de séchage considéré, un unique temps de régénération. On a vu que le temps de mise en pression initiale selon l'invention permet d'améliorer les performances de la régénération.

On peut donc prévoir que procédé comporte, pour un même cycle de colonne pour une colonne de séchage considéré, dans un même demi-cycle de régénération, plusieurs temps de mise en pression initiale précédant chacun un temps de régénération. Ainsi, on peut prévoir que le procédé comporte au moins, pour un même cycle de colonne pour une colonne de séchage considéré, dans un même demi-cycle de régénération, successivement et dans cet ordre, un premier temps de mise en pression initiale, un premier temps de régénération, un deuxième temps de mise en pression initiale et un deuxième temps de régénération.

Une telle multiplication des temps de mise en pression initiale dans un même demi-cycle de régénération sera de préférence conduite en prévoyant que, pour chaque temps de mise en pression initiale, la colonne de séchage considérée est alimentée au travers d'une section de passage des moyens de circulation et commutation qui est supérieure à la section de passage des moyens de circulation et commutation au travers de laquelle la colonne est alimentée pendant le temps de régénération. En effet, ceci permet de limiter la durée de chacun de ces temps de mise en pression initiale, pour conserver suffisamment de temps pour les temps de régénération. En multipliant ainsi les temps de mise en pression initiale, dans un même demi-cycle de régénération, on multiplie l'effet bénéfique de ces mises en pression initiales pour la performance de la régénération.

## Revendications

1. Procédé de régénération pour un sécheur (18) dans une installation (10) de production d'air comprimé médical, l'installation (10) comprenant :
- un groupe de compression d'air (12) comprenant au moins un compresseur (14) ;
- un sécheur (18) ayant au moins une première colonne de séchage (52A) et au moins une deuxième colonne de séchage (52B), le sécheur (18) opérant cycliquement, chaque colonne de séchage (52A, 52B) étant soumise à une répétition cyclique de cycles de colonne comprenant chacun un demi-cycle de production comprenant au moins un temps de séchage d'air (PROD A, PROD B), et un demi-cycle de régénération comprenant au moins un temps de régénération (REGEN A, REGEN B), la première colonne de séchage (52A) et la deuxième colonne de séchage (52B) opérant en opposition de demi-cycles ;
- des moyens de circulation et commutation d'air pour, pendant tout temps de séchage d'air (PROD A, PROD B) pour une colonne de séchage considérée (52A, 52B), faire circuler de l'air selon une première direction au travers de la colonne de séchage considérée (52A, 52B), et pendant tout temps de régénération (REGEN A, REGEN B), faire circuler de l'air sec selon une seconde direction, inverse de la première direction, au travers de la colonne de séchage considérée (52A, 52B),
**caractérisé en ce que** le procédé comporte, pour chaque colonne de séchage considérée (52A, 52B), avant le temps de régénération (REGEN A, REGEN B) pendant le demi-cycle de régénération, au moins un temps de mise en pression initiale (PRESS INIT A, PRESS INIT B), pendant lequel la colonne de séchage considérée (52A, 52B) est alimentée en air comprimé pour augmenter la pression à l'intérieur de la colonne de séchage considérée (52A, 52B) jusqu'à une
pression supérieure ou égale à une pression de seuil.

2. Procédé selon la revendication 1, **caractérisé en ce que**, à la fin du temps de mise en pression initiale (PRESS INIT A, PRESS INIT B), la pression dans la colonne de séchage considérée (52A, 52B) est égale à une pression de production correspondant à la pression dans la colonne de séchage considérée (52A, 52B) pendant tout temps de séchage d'air (PROD A, PROD B) pour la colonne de séchage considérée (52A, 52B).

3. Procédé de régénération selon l'une quelconque des revendications précédentes, **caractérisé en ce que**, pendant le temps de mise en pression initiale (PRESS INIT A, PRESS INIT B) d'une colonne de séchage considérée (52A, 52B), la colonne de séchage considérée (52A, 52B) est alimentée au travers d'une section de passage des moyens de circulation et commutation qui est supérieure à la section de passage des moyens de circulation et commutation au travers de laquelle la colonne de séchage considérée (52A, 52B) est alimentée pendant le temps de régénération (REGEN A, REGEN B).

4. Procédé de régénération selon l'une quelconque des revendications précédentes, **caractérisé en ce que** le procédé comporte, pour chaque colonne, après le temps de régénération pendant le demi-cycle de régénération, au moins un temps de mise en pression finale (PRESS FIN A, PRESS FIN B) pendant lequel la colonne de séchage considérée (52A, 52B) est alimentée en air comprimé pour augmenter la pression à l'intérieur de la colonne de séchage considérée (52A, 52B) jusqu'à une pression égale à une pression de seuil.

5. Procédé de régénération selon l'une quelconque des revendications précédentes, **caractérisé en ce que** le procédé comporte, pour chaque colonne de séchage considérée (52A, 52B), avant le temps de mise en pression initiale (PRESS INIT A, PRESS INIT B) d'un cycle de régénération donné, mais après le temps de séchage d'air (PROD A, PROD B) du demi-cycle de production immédiatement précédent pour la colonne de séchage considérée (52A, 52B), un temps de dépressurisation (PURG A, PURG B) pendant lequel la pression dans la colonne de séchage considérée (52A, 52B) est amenée à un niveau bas.

6. Procédé de régénération selon la revendication 5, **caractérisé en ce que**, pendant le temps de dépressurisation (PURG A, PURG B), la colonne de séchage considérée (52A, 52B) est alimentée au travers d'une section de passage des moyens de circulation et commutation qui est supérieure à la section de passage des moyens de circulation et commutation au travers de laquelle la colonne de séchage considérée (52A, 52B) est alimentée pendant le temps de régénération (REGEN A, REGEN B).

7. Procédé de régénération selon l'une quelconque des revendications précédentes, **caractérisé en ce que** chaque colonne de séchage considérée (52A, 52B) comporte un port primaire (54A, 54B) et un port secondaire (56A, 56B) qui définissent un chemin de circulation d'air au travers de la colonne de séchage considérée (52A, 52B), **en ce que** le port primaire (54A, 54B) est obturé pendant le temps de mise en pression initiale (PRESS INIT A, PRESS INIT B) et est relié à une évacuation d'air (62) pendant le temps de régénération (REGEN A, REGEN B), et **en ce que** le port secondaire (56A, 56B) est relié à une source d'air sec sous pression au travers d'une section de passage des moyens de circulation et commutation qui, pendant le temps de mise en pression initiale (PRESS INIT A, PRESS INIT B), est supérieure à la section de passage des moyens de circulation et commutation au travers de laquelle la colonne est alimentée pendant le temps de régénération (REGEN A, REGEN B).

8. Procédé de régénération selon l'une quelconque des revendications précédentes, **caractérisé en ce que** les moyens de circulation et commutation comprennent au moins une vanne d'évacuation (63), à commande externe, entre le port primaire (54A, 54B) et l'évacuation d'air (62), et au moins une vanne de mise en pression rapide (84), à commande externe, entre une source d'air sec sous pression et le port secondaire (56A, 56B), **en ce que**, pendant le temps de mise en pression initiale (PRESS INIT A, PRESS INIT B), la vanne d'évacuation (63) est commandée dans un état fermé (0) tandis que la vanne de mise en pression initiale est commandée dans un état ouvert (1), et **en ce que**, pendant le temps de régénération (REGEN A, REGEN B), la vanne d'évacuation (63) est commandée dans un état ouvert (1) tandis que la vanne de mise en pression rapide (84) est commandée dans un état fermé (0) ou dans un état partiellement ouvert avec une section de passage inférieure à sa section de passage pendant le temps de mise en pression initiale (PRESS INIT A, PRESS INIT B).

9. Procédé de régénération selon l'une quelconque des revendications précédentes, **caractérisé en ce que** le procédé comporte, pour un même cycle de colonne pour une colonne de séchage (52A, 52B) considérée, dans un même demi-cycle de régénération, plusieurs temps de mise en pression initiale précédant chacun un temps de régénération.

10. Sécheur (18) pour une installation (10) de production d'air comprimé médical, le sécheur (18) ayant au moins :
- au moins une première colonne de séchage (52A) et au moins une deuxième colonne de séchage (52B), le sécheur (18) opérant cycliquement, chaque colonne de séchage (52A, 52B) étant soumise à une répétition cyclique de cycles de colonne comprenant chacun un demi-cycle de production comprenant au moins un temps de séchage d'air (PROD A, PROD B), et un demi-cycle de régénération comprenant au moins un temps de régénération (REGEN A, REGEN B), la première colonne de séchage et la deuxième colonne de séchage opérant en opposition de demi-cycles, et
- des moyens de circulation et commutation d'air pour, pendant tout temps de séchage d'air pour une colonne de séchage considérée, faire circuler de l'air selon une première direction au travers de la colonne de séchage (52A, 52B) considérée, et pendant tout temps de régénération (REGEN A, REGEN B), faire circuler de l'air sec selon une seconde direction, inverse de la première direction, au travers de la colonne de séchage (52A, 52B) considérée,
**caractérisé en ce que** les moyens de circulation et commutation d'air sont configurés pour que, pour chaque colonne de séchage (52A, 52B) considérée, la colonne de séchage (52A, 52B) considérée soit alimentée en air comprimé, pendant au moins un temps de mise en pression initiale avant un temps de régénération pendant le demi-cycle de régénération, pour augmenter la pression à l'intérieur de la colonne de séchage (52A, 52B) considérée jusqu'à une pression supérieure ou égale à une pression de seuil.

11. Sécheur selon la revendication 10, **caractérisé en ce que** les moyens de circulation et commutation d'air sont configurés pour que, pendant le temps de mise en pression initiale (PRESS INIT A, PRESS INIT B), la colonne de séchage (52A, 52B) considérée est alimentée au travers d'une section de passage des moyens de circulation et commutation qui est supérieure à la section de passage des moyens de circulation et commutation au travers de laquelle la colonne de séchage (52A, 52B) considérée est alimentée pendant le temps de régénération (REGEN A, REGEN B).

12. Sécheur selon l'une quelconque des revendications 10 ou 11, **caractérisé en ce que** les moyens de circulation et commutation d'air sont configurés pour que, pour chaque colonne de séchage (52A, 52B) considérée, pendant le demi-cycle de régénération, au moins un temps de mise en pression finale (PRESS FIN A, PRESS FIN B) soit effectué après le temps de régénération.

13. Sécheur selon l'une quelconque des revendications 10 à 12, **caractérisé en ce que** chaque colonne de séchage (52A, 52B) considérée comporte un port primaire (54A, 54B) et un port secondaire (56A, 56B) qui définissent un chemin de circulation d'air au travers de la colonne de séchage (52A, 52B) considérée, **en ce que** le port primaire (54A, 54B) est obturé pendant le temps de mise en pression initiale (PRESS INIT A, PRESS INIT B) et est relié à une évacuation d'air (62) pendant le temps de régénération (REGEN A, REGEN B), et **en ce que** le port secondaire (56A, 56B) est relié à une source d'air sec sous pression au travers d'une section de passage des moyens de circulation et commutation qui, pendant le temps de mise en pression initiale (PRESS INIT A, PRESS INIT B), est supérieure à la section de passage des moyens de circulation et commutation au travers de laquelle la colonne de séchage (52A, 52B) considérée est alimentée pendant le temps de régénération (REGEN A, REGEN B).

14. Sécheur selon la revendications 13, **caractérisé en ce que** les moyens de circulation et commutation comprennent au moins une vanne d'évacuation (63), à commande externe, entre le port primaire (54A) et l'évacuation d'air (62), et au moins une vanne de mise en pression rapide (84), à commande externe, entre une source d'air sec sous pression et le port secondaire (56A, 56B), **en ce que**, pendant le temps de mise en pression initiale (PRESS INIT A, PRESS INIT B), la vanne d'évacuation (63) est commandée dans un état fermé (0) tandis que la vanne de mise en pression rapide (84) est commandée dans un état ouvert (1), et **en ce que**, pendant le temps de régénération (REGEN A, REGEN B), la vanne d'évacuation (63) est commandée dans un état ouvert (1) tandis que la vanne de mise en pression rapide (84) est commandée dans un état fermé ou dans un état partiellement ouvert avec une section de passage inférieure à sa section de passage pendant le temps de mise en pression initiale (PRESS INIT A, PRESS INIT B).

15. Sécheur selon l'une quelconque des revendications 13 ou 14, **caractérisé en ce que** les moyens de circulation et commutation d'air comportent, entre les ports primaires respectifs de la première colonne de séchage (52A) et de la deuxième colonne de séchage (52B), une première tubulure (78) qui détermine une première section de passage entre la première colonne et la deuxième colonne de séchage, et une deuxième tubulure (82), en parallèle de la première tubulure entre les ports primaires respectifs de la première colonne de séchage (52A) et de la deuxième colonne de séchage (52B), la deuxième tubulure (82) étant munie de la vanne commandée de mise en pression initiale (54).
